# EUROPÄISCHE PATENTSCHRIFT

(11) **EP 4 241 916 B1**
(45) Veröffentlichungstag und Bekanntmachung des Hinweises auf die Patenterteilung: **04.02.2026**
(21) Anmeldenummer: 23160502.3
(22) Anmeldetag: 07.03.2023
(51) Int. Cl.: B23Q 1/00

(54) **BEFESTIGUNGSANORDNUNG FÜR EINE BEARBEITUNGSMASCHINE**
FASTENING ARRANGEMENT FOR A PROCESSING MACHINE
DISPOSITIF DE FIXATION POUR UNE MACHINE D'USINAGE

(30) Priorität: 10.03.2022 DE 102022105715
(43) Veröffentlichungstag der Anmeldung: 13.09.2023
(73) Patentinhaber: Gröbner Fertigungs GmbH, 83367 Petting (DE)
(72) Erfinder: Gröbner, Andreas, 83329 Waging am See (DE)
(74) Vertreter: Naessens, Stephan

(56) Entgegenhaltungen:
- EP-A1- 1 595 641
- EP-A1- 3 875 215
- JP-A- 2005 081 480
- JP-A- 2016 215 293

## Beschreibung

Die vorliegende Erfindung betrifft eine Befestigungsanordnung für eine Bearbeitungsmachine mit einem plattenförmigen Grundkörper mit zumindest einer Aufnahmebohrung und mit zumindest einem Befestigungsbolzen zum unmittelbaren oder mittelbaren Befestigen von zu bearbeitenden Werkstücken, wobei der Befestigungsbolzen in der Aufnahmebohrung des Grundkörpers lösbar befestigt. Ferner betrifft die Erfindung einen Befestigungsbolzen für eine Befestigungsanordnung und eine Bearbeitungsmachine mit der Befestigungsanordnung sowie ein Verfahren zum Betätigen einer Befestigungsanordnung.

Aus der Druckschrift DE 10 2005 033 468 A1 ist eine Spannvorrichtung für Bearbeitungsmachinen bekannt. Die Spannvorrichtung umfasst einen Grundkörper, in dem ein Fixierelement lösbar eingesetzt ist. Das Fixierelement trägt einen Werkstückträger, auf dem zu bearbeitende Werkstücke angeordnet sind. Der Grundkörper weist eine topfartige Aufnahme auf, in die das Fixierelement eingesetzt wird. Das Fixierelement ist rotationssymmetrisch um seine Längsachse ausgebildet. Wenn das Fixierelement in der Aufnahme eingesetzt ist, wird dieses von einem im Grundkörper angeordneten Spannelement allseitig umlaufen und liegt in dessen Mitte. Das Spannelement wird im Querschnitt durch gebogene ringförmige Wandungen gebildet, welche aus einem biegsamen verformbaren Material gefertigt sind. An den radial nach innen gewandten Rändern des Spannelements schließt sich ein Klemmteil an, welches mit den Wandlungen derart verbunden ist, dass eine Verformung der Wandungen in radialer Richtung nach innen auf das Klemmteil in gleicher Richtung wirkt, sodass das Klemmteil wiederum nach radial innen auf das Fixierelement bewegt wird, sodass das Fixierelement in der Aufnahme des Grundkörpers fixiert wird.

Aus der Druckschrift JP 2016- 215 293 A ist eine Klemmvorrichtung zum Befestigen einer Palette an einem Grundkörper über einen an der Palette befestigten Bolzen bekannt. Der Grundkörper bildet einen Zylinder für einen Kolben, der mittels einer Hydraulikmittelbeaufschlagung gegen die Federkraft von Druckfedern bewegbar angeordnet ist, wobei sich die Druckfedern an einem kegelförmigen Element abstützen.

Das kegelförmige Element weist eine zentrale Bohrung auf und ist mit dem Grundkörper verbunden. Im Inneren der zentralen Bohrung ist ein in axialer Richtung bewegbares federbelastetes ringförmiges Kragenelement angeordnet. Das Kragenelement ist oberhalb des Zylinders angeordnet und umgibt Verrieglungselemente, welche durch die axiale Bewegung des Kragenelements betätigt werden, um den Bolzen freizugeben oder zu fixieren. Im geschlossenen Zustand der Verrieglungselemente werden die mit dem Kolben gekoppelten Verrieglungselemente notwendiger Weise durch den federbelasteten Kolben gehalten, wobei die Verrieglungselemente den Bolzen zur Befestigung umgreifen. Zum Öffnen der Verrieglungselemente ist es zwingend erforderlich, dass der Kolben über eine erste Hydraulikmittelversorgung und das Kragenelement über eine zweite Hydraulikmittelversorgung mit Hydraulikmittel beaufschlagt werden, um die Verrieglungselemente zum Freigegeben des Bolzens zu betätigen.

Es hat sich gezeigt, dass bei der bekannten Spannvorrichtung zum korrekten Fixieren des Fixierelementes eine korrekte Lage des Fixierelementes in der Aufnahme sichergestellt werden muss, da ansonsten das Klemmteil nicht in formschlüssige Verbindung mit dem Fixierelement bringbar ist. Wenn beispielsweise Fremdpartikel, wie zum Beispiel Späne oder dergleichen in der Aufnahme vorhanden sind, kann das Fixierelement nicht in seiner zum Fixieren korrekten Position in der Aufnahme angeordnet werden. Infolgedessen kann keine korrekte Fixierung des Fixierelementes in der Aufnahme mit der bekannten Spannvorrichtung erfolgen, sodass der an dem Fixierelement vorgesehene Werkstückträger nicht sicher in der Bearbeitungsmachine befestigt wird.

Der vorliegenden Erfindung liegt die Aufgabe zugrunde, eine Befestigungsanordnung und einem Befestigungsbolzen sowie eine Bearbeitungsmaschine bzw. Werkzeugmaschine mit der Befestigungsanordnung und ein Verfahren zum Betätigen der Befestigungsanordnung vorzuschlagen, welche eine sichere Befestigung eines unmittelbar oder mittelbar mit dem Befestigungsbolzen befestigten Werkstückes oder dergleichen in einem Grundkörper der Befestigungsanordnung möglichst konstruktiv einfach und besonders kompakt gewährleisten.

Diese Aufgabe wird erfindungsgemäß durch die Merkmale des Patentanspruches 1 bzw. 10 bzw. 11 gelöst. Vorteilhafte und beanspruchte Weiterbildungen ergeben sich aus den jeweiligen Unteransprüchen und der Beschreibung sowie den Zeichnungen.

Somit wird eine Befestigungs- bzw. Spannanordnung für eine Bearbeitungsmachine, Werkzeugmaschine oder dergleichen mit einem plattenförmigen Grundkörper mit zumindest einer Aufnahme bzw. Aufnahmebohrung oder dergleichen und mit zumindest einem Befestigungsbolzen zum unmittelbaren oder mittelbaren Befestigen von zu bearbeitenden Werkstücken, Paletten zum Aufnehmen von Werkstücken, Werkstückträgern oder dergleichen vorgeschlagen, wobei jeder Befestigungsbolzen in der Aufnahmebohrung des Grundkörpers lösbar befestigt ist. Um eine sichere und konstruktiv einfache Befestigung des Befestigungsbolzens an dem Grundkörper zu gewährleisten, ist vorgesehen, dass der Grundkörper einen Aufnahmeraum aufweist, in dem zumindest ein axial bewegbares Betätigungselement vorgesehen ist, mit dem mehrere Hebelelemente zum axialen Bewegen zum Ausführen einer Einzugsbewegung des Befestigungsbolzens in der Aufnahmebohrung zum Spannen und Verriegeln oder zum Entspannen und Entriegeln des Befestigungsbolzens betätigbar sind.

Auf diese Weise wird bei der vorgeschlagenen Befestigungsanordnung zum Spannen und Verriegeln oder zum Entspannen und Entriegeln des Befestigungsbolzens eine axiale Bewegung über eine auf den Befestigungsbolzen wirkende Einzugskraft realisiert, sodass der Befestigungsbolzen in die Aufnahmebohrung axial zum Spannen hineingezogen und anschließend verriegelt wird. Somit ist sichergestellt, dass der Befestigungsbolzen quasi automatisch in seine Verriegelungsposition bewegt wird. Dadurch, dass Hebelelemente zum Einsatz kommen, die die axiale Bewegung des Betätigungselements auf den Befestigungsbolzen übertragen, wird eine zum Beispiel exponentiell steigende Einzugskraft zum Ausführen der Einzugsbewegung bei dem Befestigungsbolzen ermöglicht.

Im Rahmen der vorliegenden Erfindung ist vorgesehen, dass ein erstes Ende jedes Hebelelements dem Betätigungselement und ein zweites Ende jedes Hebelelements dem in der Aufnahmebohrung vorgesehenen Befestigungsbolzen zugeordnet sind. Somit wird eine Kraft- bzw. Wegübertragung zwischen dem Betätigungselement und dem Befestigungsbolzens durch ein Schwenken der in der Befestigungsanordnung gelagerten Hebelelemente zum Spannen bzw. Verriegeln und zum Entspannen bzw. Entriegeln des Befestigungsbolzens auf konstruktiv einfache und bauraumgünstige Weise realisiert.

Eine besonders kompakte mit geringer Bauhöhe realisierte Ausführung wird dadurch realisiert, dass jedes Hebelelement einen dem Betätigungselement zugeordneten Lagerabschnitt zum Ausführen einer Schwenkbewegung und einen dem Grundkörper zugeordneten ersten Abstützabschnitt und einen einem Deckelelement des Grundkörpers zugeordneten zweiten Abstützabschnitt zum Lagern sowie einen dem Befestigungsbolzen zugewandten Anlageabschnitt zum axialen Bewegen zum Spannen und Verriegeln oder Entriegeln des Befestigungsbolzens in der Aufnahmebohrung des Grundkörpers aufweist. Auf diese Weise werden die erforderlichen Abschnitte zum schwenkbaren Lagern, zum Abstützen und auch zum Verriegeln und Entriegeln besonders bauraumgünstig an den vorgesehenen Hebelelementen realisiert.

Ferner ist im Rahmen der vorliegenden Erfindung vorgesehen, dass der Lageabschnitt dem ersten Ende jedes Hebelelements zugeordnet ist, während der erste und zweite Abstützabschnitt sowie der Anlageabschnitt dem zweiten Ende jedes Hebelelements zugeordnet sind, wobei der erste Abstützabschnitt an dem Grundkörper und der zweite Abstützabschnitt an dem Deckelelement sowie der Anlageabschnitt an der korrespondierenden Anlagefläche des Befestigungsbolzens anliegen. Der Lagerabschnitt an dem ersten Ende des Hebelelements bildet somit die schwenkbare Lagerung an dem Betätigungselement, wobei das zweite Ende einerseits die gehäuseseitige Abstützung an dem Deckelelement und dem Grundkörper sowie andererseits die Anlage an dem Befestigungsbolzen zum axialen Bewegen ermöglichen. Vorzugsweise werden somit quasi einarmige Hebelelemente bei der vorgeschlagenen Befestigungsanordnung eingesetzt.

Um die auf den Befestigungsbolzen wirkende Einzugs- oder Spannkraft bzw. die bewirkte axiale Bewegung entsprechend anzupassen bzw. zu verändern, kann im Rahmen der vorliegenden Erfindung vorgesehen sein, dass der Anlageabschnitt jedes Hebelelements an einer in einem vorbestimmten Winkel bezogen auf die Längsachse ausgerichteten Anlagefläche des Befestigungsbolzens anliegt. Der von dem Befestigungsbolzen ausgeführte axiale Weg zum Verriegeln und Entriegeln ist gemäß der Erfindung von dem gewählten Winkel an der Anlagefläche abhängig. Je kleiner der Winkel an der Anlagefläche ist, desto größer ist der axiale Weg des Befestigungsbolzens. Somit kann der vorbestimmte Winkel bzw. die vorbestimmte Schräge an der Anlagefläche des Befestigungsbolzens entsprechend gewählt werden, um die Einzugskraft und damit auch den axialen Weg zum Spannen und Verriegeln oder Entspannen und Entriegeln des Befestigungsbolzens zu verändern.

Für eine möglichst optimale Ausnutzung des Aufnahmeraumes in dem Grundkörper kann im Rahmen der vorliegenden Erfindung vorgesehen sein, dass der Aufnahmeraum in dem Grundkörper um die zentral angeordnete Aufnahmebohrung im Wesentlichen ringförmig ausgeführt ist und dass das Betätigungselement eine an den ringförmigen Aufnahmeraum angepasste Ringform aufweist. Somit ist das Betätigungselement quasi als Kolbenelement in dem ringzylinderförmigen Aufnahmeraum axial bewegbar angeordnet und der stabförmige bzw. stangenförmige Befestigungsbolzen in der zentralen Aufnahmebohrung axial bewegbar aufgenommen.

Um die axiale Bewegung des Betätigungselements bodensseitig in dem Aufnahmeraum des Grundkörpers zu begrenzen, ist vorgesehen, dass der Aufnahmeraum durch ein an dem Grundkörper befestigtes Deckelelement oder dergleichen nach unten hin begrenzt ist. Somit dient das Deckelelement quasi als unterer Anschlag und der Aufnahmeraum des Grundkörpers als oberer Anschlag für das kolbenförmige Betätigungselement.

Für die schwenkbare Bewegung der Hebelelemente bei einer axialen Bewegung des Betätigungselements wird im Rahmen der Erfindung vorgesehen, dass das ringförmige Betätigungselement über den Umfangsbereich des Innendurchmessers verteilt mehrere Lageraufnahmen oder dergleichen für die Lagerabschnitte der Hebelelemente aufweist.

Zur Abstützung von Federelementen oder dergleichen zum federbelasteten Beaufschlagen des Betätigungselements, um dadurch eine Vorspannung des Betätigungselement zu realisieren, ist vorgesehen, dass das ringförmige Betätigungselement über den Umfang im Bereich des Außendurchmessers mehrere Aufnahmebereiche für die z. B. als Druckfedern ausgeführten Federelemente oder dergleichen aufweist, wobei die Federelemente jeweils mit einem ersten Ende in dem Aufnahmebereich des Betätigungselementes und mit einem zweiten Ende an dem Deckelelement abgestützt sind. Anstelle der Federelemente können auch andere elastische Elemente oder andere Betätigungsarten zum Vorspannen des Betätigungselements eingesetzt werden.

Der Befestigungsbolzen ist zum Einsatz in der bzw. für die Befestigungsanordnung vorgesehen. Der Befestigungsbolzen weist eine an einer Durchmesserstufe des Befestigungsbolzens umlaufende Anlagefläche mit einem vorbestimmten Winkel bezogen auf eine Längsachse des Befestigungsbolzens zum Aufbringen einer auf den Befestigungsbolzen wirkenden Einzugskraft zum axialen Bewegen auf. Über diese zum Beispiel ringförmig ausgeführte Anlagefläche wird eine entsprechende Betätigungskraft bzw. Spannkraft auf den Befestigungsbolzen übertragen, sodass dieser verspannt bzw. verriegelt oder entspannt bzw. entwickelt werden kann. Durch die Veränderung des vorbestimmten Winkels kann die wirkende Einzugskraft und damit auch der dadurch bewirkte axiale Weg des Befestigungsbolzens zum Verriegeln und Entriegeln entsprechend angepasst werden.

Im Rahmen der Erfindung ist vorgesehen, dass der von dem Befestigungsbolzen ausgeführte axiale Weg von dem Winkel der Anlagefläche abhängig ist, wobei je spitzer bzw. kleiner der Winkel an der Anlagefläche ist, desto größer ist der axiale Weg des Befestigungsbolzens in die bzw. aus der Aufnahmebohrung. Hieraus ergibt sich, dass bei einem großen axialen Weg des Befestigungsbolzens die Verriegelungskraft geringer wird und umgekehrt.

Die der Erfindung zugrunde liegende Aufgabe wird auch durch eine Bearbeitungsmachine bzw. eine Werkzeugmaschine oder dergleichen mit zumindest der vorbeschriebenen Befestigungsanordnung gelöst, sodass sich durch die separate Beanspruchung der Bearbeitungsmaschine die bereits beschriebenen und weitere Vorteile ergeben.

Schließlich wird die der Erfindung zugrunde liegende Aufgabe auch durch ein Verfahren zum Betätigen der vorbeschriebenen Befestigungsanordnung gelöst. Bei dem separat beanspruchten Verfahren wird der Befestigungsbolzen der Befestigungsanordnung über eine Anlagefläche und daran anliegenden Hebelelemente in einem Aufnahmeraum eines Grundkörpers in einer gespannten und verriegelten Position gehalten. Zum axialen Bewegen des Befestigungsbolzens in eine entspannte bzw. entriegelte Position wird ein unter Druck stehendes Medium in den Aufnahmeraum eingeleitet, sodass ein Betätigungselement axial gegen eine Vorspannung bewegt wird und dadurch die Hebelelemente geschwenkt werden und der verriegelte Befestigungsbolzen freigegeben wird. Der freigegebene Befestigungsbolzen wird nach dem Entfernen des Mediums aufgrund der durch die Vorspannung bewirkten axialen Bewegung wieder verriegelt.

Durch die erfindungsgemäß vorgesehene axiale Bewegung des Befestigungsbolzens in bzw. aus der Aufnahmebohrung wird eine sichere Verriegelung aber auch eine sichere Entriegelung mit dem vorgeschlagenen Verfahren realisiert.

Nachfolgend wird die vorliegende Erfindung anhand der Zeichnungen weiter erläutert.

Es zeigen:
Figur 1 eine Explosionsdarstellung einer möglichen Ausführungsvariante einer erfindungsgemäßen Befestigungsanordnung für eine Bearbeitungsmachine;
Figur 2 eine Draufsicht auf einen Grundkörper der Befestigungsanordnung;
Figur 3 eine geschnittene Ansicht der Befestigungsanordnung im verriegelten Zustand entlang der Schnittlinie A-A gemäß Figur 2;
Figur 4 eine geschnittene Ansicht der Befestigungsanordnung im entriegelten Zustand entlang der Schnittlinie A-A gemäß Figur 2;
Figur 5 eine dreidimensionale Einzelteilansicht von unten in einen Aufnahmeraum des Grundkörpers;
Figur 6 eine dreidimensionale Einzelteilansicht von unten auf ein Betätigungselement zum Betätigen von Hebelelementen zum Verriegeln oder Entriegeln eines Befestigungsbolzens;
Figur 7 eine dreidimensionale Einzelteilansicht eines Deckelelementes zum Begrenzen des Aufnahmeraumes des Grundkörpers;
Figur 8 eine seitliche Einzelteilansicht eines Hebelelementes der Befestigungsanordnung;
Figur 9 eine dreidimensionale Einzelteilansicht des Hebelelementes;
Figur 10 eine Einzelteilansicht eines Befestigungsbolzens mit einem ersten größeren stumpfen Winkel an einer Anlagefläche;
Figur 11 ein Diagramm mit einem über einen axialen Weg des Betätigungselementes aufgetragenen axialen Weg des Befestigungsbolzens mit dem ersten Winkel der Anlagefläche;
Figur 12 eine Einzelteilansicht des Befestigungsbolzens mit einem zweiten mittleren Winkel an der Anlagefläche;
Figur 13 ein Diagramm mit dem über den axialen Weg des Betätigungselementes aufgetragenen axialen Weg des Befestigungsbolzens mit dem zweiten Winkel der Anlagefläche;
Figur 14 eine Einzelteilansicht des Befestigungsbolzens mit einem dritten kleineren spitzen Winkel an der Anlagefläche; und
Figur 15 ein Diagramm mit dem über den axialen Weg des Betätigungselementes aufgetragenen axialen Weg des Befestigungsbolzen mit dem dritten Winkel der Anlagefläche.

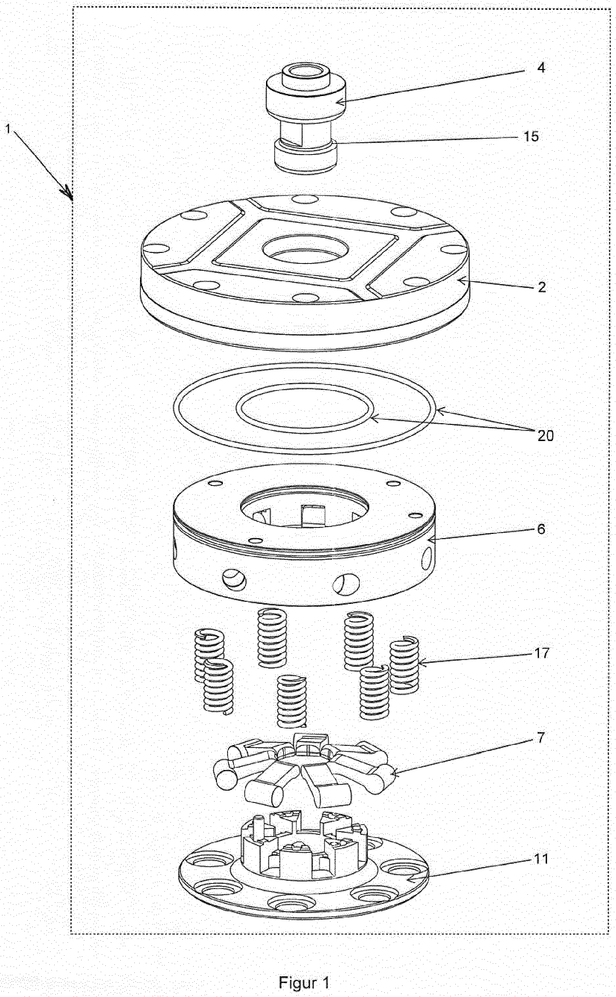

In den Figuren 1 bis 15 sind verschiedene Ansichten einer erfindungsgemäßen Befestigungsanordnung für eine Bearbeitungsmachine lediglich beispielhaft dargestellt. Die Befestigungsanordnung ist an einer nur schematisch angedeuteten Bearbeitungsmachine 1 befestigt. Als Bearbeitungsmaschine bzw. Werkzeugmaschine 1 kann zum Beispiel eine Drehmaschine, eine Fräsmaschine, ein 3D-Drucker oder auch ein Roboter eingesetzt werden.

Die Befestigungsanordnung weist einen z.B. plattenförmigen Grundkörper 2 mit einem kreisförmigen Durchmesser mit zumindest einer Aufnahmebohrung 3 und mit zumindest einem Befestigungsbolzen 4 zum unmittelbaren oder mittelbaren Befestigen von zu bearbeitenden Werkstücken auf. Die Werkstücke können direkt mit dem Befestigungsbolzen 4 oder auch indirekt beispielsweise über einen Palettenträger, über eine Werkzeugspannvorrichtung oder dergleichen an dem Befestigungsbolzen 4 befestigt werden.

Der Befestigungsbolzen 4 ist in der Aufnahmebohrung 3 des Grundkörpers 2 lösbar befestigt. Um eine sichere und konstruktiv einfache Befestigung des Befestigungsbolzens 4 zu realisieren, ist vorgesehen, dass der Grundkörper 2 einen Aufnahmeraum 5 aufweist, in dem ein axial bewegbares Betätigungselement 6 vorgesehen ist, mit dem mehrere Hebelelemente 7 zum axialen Bewegen des Befestigungsbolzens in der Aufnahmebohrung 5 zum Spannen und Verriegeln oder zum Entspannen und Entriegeln des Befestigungsbolzens 4 betätigbar sind.

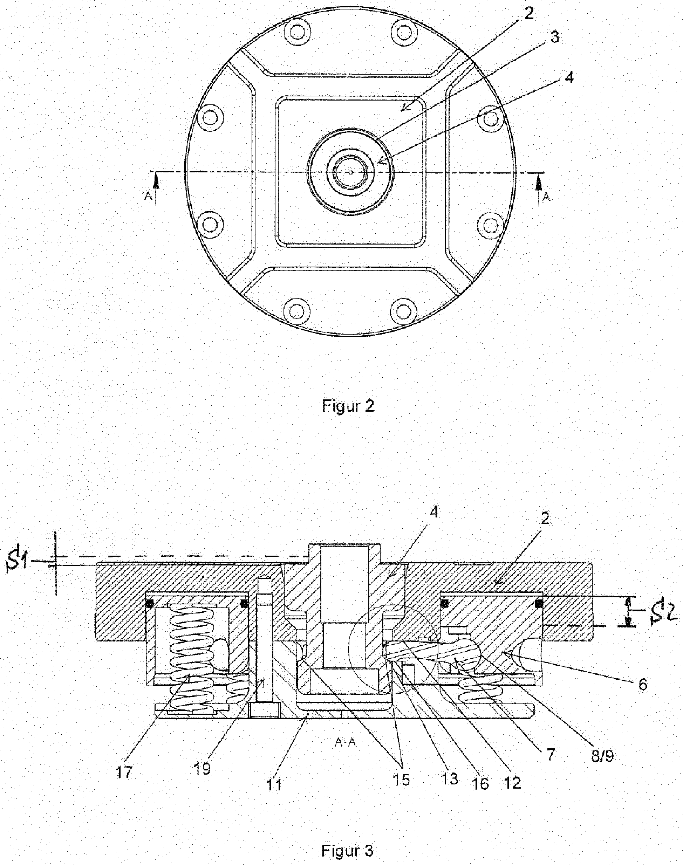

In Figur 1 ist eine Explosionsdarstellung der verschiedenen Bauteile der Befestigungsanordnung dargestellt, bei denen die verschiedenen Bauteile der Befestigungsanordnung verdeutlicht werden, während Figur 2 eine Draufsicht auf den Grundkörper 4 der Befestigungsanordnung zeigt.

Figur 3 zeigt einen Schnitt entlang der Schnittlinie A-A gemäß Figur 2 durch die Befestigungsanordnung in einem gespannten bzw. verriegelten Zustand, in dem der Befestigungsbolzen 4 in der Aufnahmebohrung 3 des Grundkörpers 2 über die Hebelelemente 7 verriegelt ist. Dadurch, dass ein erstes Ende jedes Hebelelements 7 mit dem Betätigungselement 6 und ein zweites Ende jedes Hebelelements 7 mit dem in der Aufnahmebohrung 3 vorgesehenen Befestigungsbolzen 4 in Wirkverbindung steht, wird der Befestigungsbolzen 4 durch das entsprechend über als Druckfedern ausgeführte Federelemente 17 vorgespannte Betätigungselement 6 über die Hebelelemente 7 vorgespannt und in der Aufnahmebohrung 3 des Grundkörpers 2 der Befestigungsanordnung verriegelt.

Ferner ist in Figur 3 der für die Verriegelung des Befestigungsbolzens 4 erforderliche axiale Weg S2 des Betätigungselements 6 in dem Aufnahmeraum 5 des Grundkörpers 2 beispielhaft bezeichnet. Zudem ist der durch den axialen Weg S2 des Betätigungselement 6 über die Hebelelemente 7 bewirkte axiale Weg S1 des Befestigungsbolzens 4 in der Aufnahmebohrung 3 des Grundkörpers 2 zum Spannen bzw. Verriegeln in Figur 3 beispielhaft angedeutet.

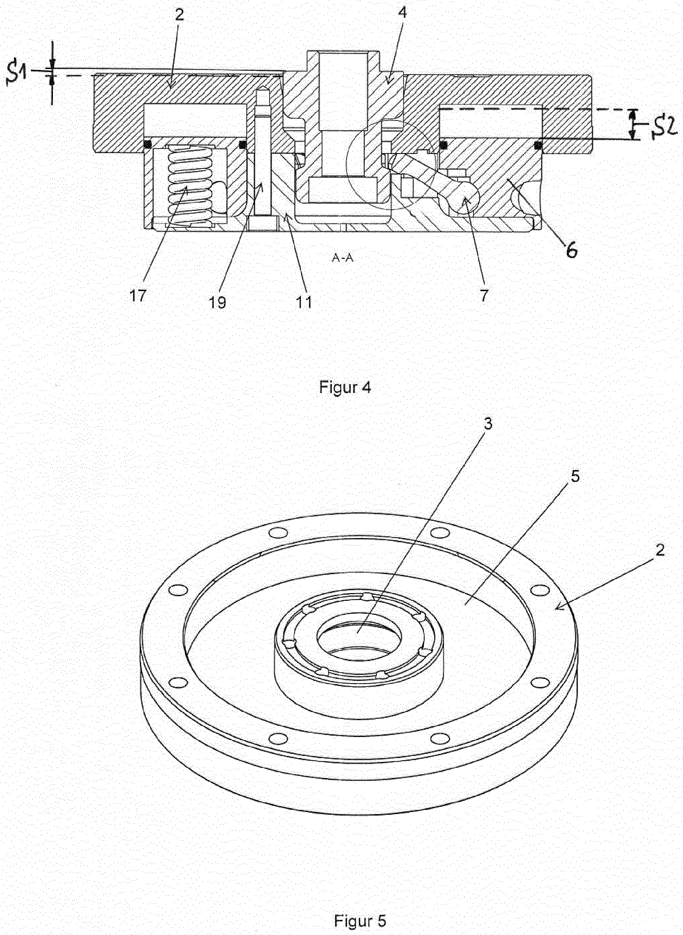

Figur 4 zeigt einen Schnitt entlang der Schnittlinie A-A gemäß Figur 2 durch die Befestigungsanordnung in einem entriegelten Zustand des Befestigungsbolzens 4. Zum axialen Bewegen des Befestigungsbolzens 4 in die entspannte bzw. entriegelte Position wird ein unter Druck stehendes Medium, zum Beispiel Druckluft, in den Aufnahmeraum 5 des Grundkörpers 4 eingeleitet, sodass das Betätigungselement 6 axial gegen die Vorspannung der als Druckfedern ausgeführten Federelemente 17 bewegt wird und dadurch die Hebelelemente 7 geschwenkt werden und der verriegelte Befestigungsbolzen 4 freigegeben wird, sodass der Befestigungsbolzen 4 aus der Aufnahmebohrung 3 herausgezogen werden kann. Nach dem Entfernen der Druckluft kann der freigegebene Befestigungsbolzen 4 mithilfe der durch die als Druckfedern ausgeführten Federelemente 17 erzeugten Vorspannkräfte quasi automatisch wieder verriegelt werden.

Ferner ist in Figur 4 der für die Entriegelung des Befestigungsbolzens 4 erforderliche axiale Weg S2 des Betätigungselements 6 in dem Aufnahmeraum 5 des Grundkörpers 2 beispielhaft bezeichnet. Zudem ist der durch den axialen Weg S2 des Betätigungselement 6 über die Hebelelemente 7 bewirkte axiale Weg S1 des Befestigungsbolzens 4 in der Aufnahmebohrung 3 des Grundkörpers 2 zum Entspannen bzw. Entriegeln in Figur 4 beispielhaft angedeutet.

Figur 5 zeigt eine Einzelteilansicht des Grundkörpers 2 von der Unterseite in den Aufnahmeraum 5. Der Aufnahmeraum 5 in dem Grundkörper 2 ist um die zentrale angeordnete Aufnahmebohrung 3 im Wesentlichen ringförmig ausgeführt. In dem ringförmigen Aufnahmeraum 5 ist das nicht weiter dargestellte Betätigungselement 6 axial bewegbar aufgenommen und geführt.

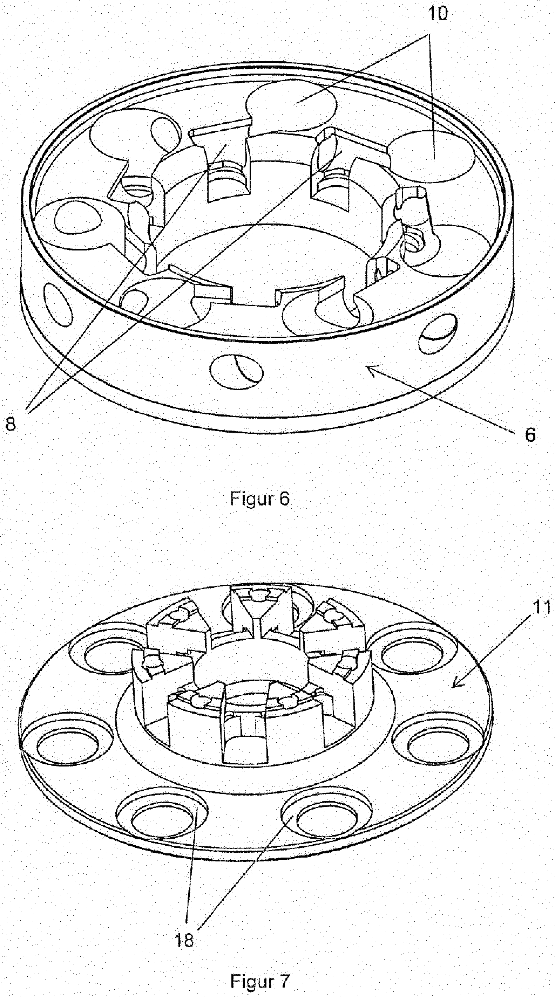

Die in Figur 6 dargestellte Einzelteilansicht des Betätigungselements 6 zeigt, dass das Betätigungselement 6 eine an den ringförmigen Aufnahmeraum 5 angepasste Ringform aufweist. Das axial bewegbare ringförmige bzw. kolbenförmige Betätigungselement 6 weist über den Umfang im Bereich des Innendurchmessers verteilt mehrere Lageraufnahmen 8 für Lagerabschnitte 9 der Hebelelemente 7 auf. Ferner weist das ringförmige Betätigungselement 6 über den Umfang im Bereich des Außendurchmessers mehrere Aufnahmebereiche 10 für Federelemente 17 zum Erzeugen der Vorspannung auf, die jeweils mit einem ersten Ende in dem Aufnahmebereich 10 an dem Betätigungselement 6 und mit einem zweiten Ende an einem Aufnahmebereich 18 eines Deckelelementes 11 abgestützt sind.

Das Deckelelement 11 ist in einer Einzelteilansicht in Figur 7 dargestellt, wobei das Deckelelement 11 an der Unterseite des Grundkörpers 2 über Befestigungsschrauben 19 befestigt ist und somit den Aufnahmeraum 5 des Grundkörpers 2 entsprechend begrenzt.

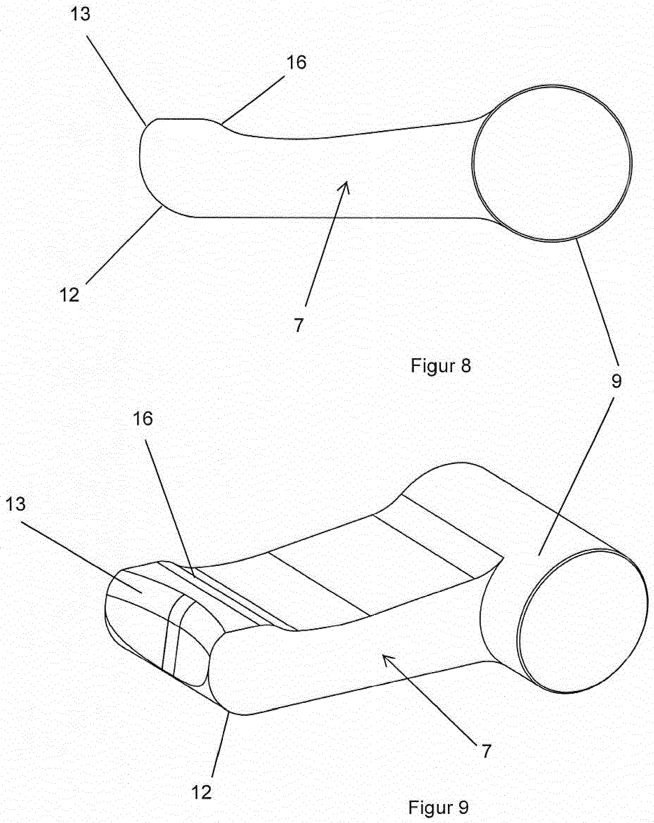

In den Figuren 8 und 9 sind Einzelteilansichten des Hebelelementes 7 dargestellt. Hieraus ergibt sich, dass jedes Hebelelement 7 einen dem Betätigungselement 6 zugeordneten Lagerabschnitt 9 zum Ausführen einer Schwenkbewegung und einen dem Grundkörper 2 zugeordneten ersten Abstützabschnitt 12 zum Abstützen am Grundkörper 2 sowie einen dem Deckelelement 11 zugeordneten zweiten Abstützabschnitt 16 zum Abstützen am Deckelelement 11 aufweist. Ferner weist jedes Hebelelement 7 einen dem Befestigungsbolzen 4 zugeordneten Anlageabschnitt 13 zum axialen Bewegen zum Spannen und Verriegeln oder zum Entspannen und Entriegeln des Befestigungsbolzens 4 in der Aufnahmebohrung 3 des Grundkörpers 2 auf. Der Lagerabschnitt 9 ist dem ersten Ende des Hebelelementes 7 zugeordnet, während der erste Abstützabschnitt 12 und der zweite Abstützabschnitt 16 sowie der Anlageabschnitt 13 dem zweiten Ende des Hebelelementes 7 zugeordnet sind. Somit ist das erste Ende jedes Hebelelements 7 dem Betätigungselement 6 und das zweite Ende jedes Hebelelements 7 dem in der Aufnahmebohrung 3 vorgesehenen Befestigungsbolzen 4 zugeordnet. Auf diese Weise wird durch eine Bewegung des Betätigungselement 6 eine Schwenkbewegung der Hebelelemente 7 und damit eine axiale Bewegung des Befestigungsbolzens 4 zum Spannen und Verriegeln oder zum Entspannen und Entriegeln realisiert.

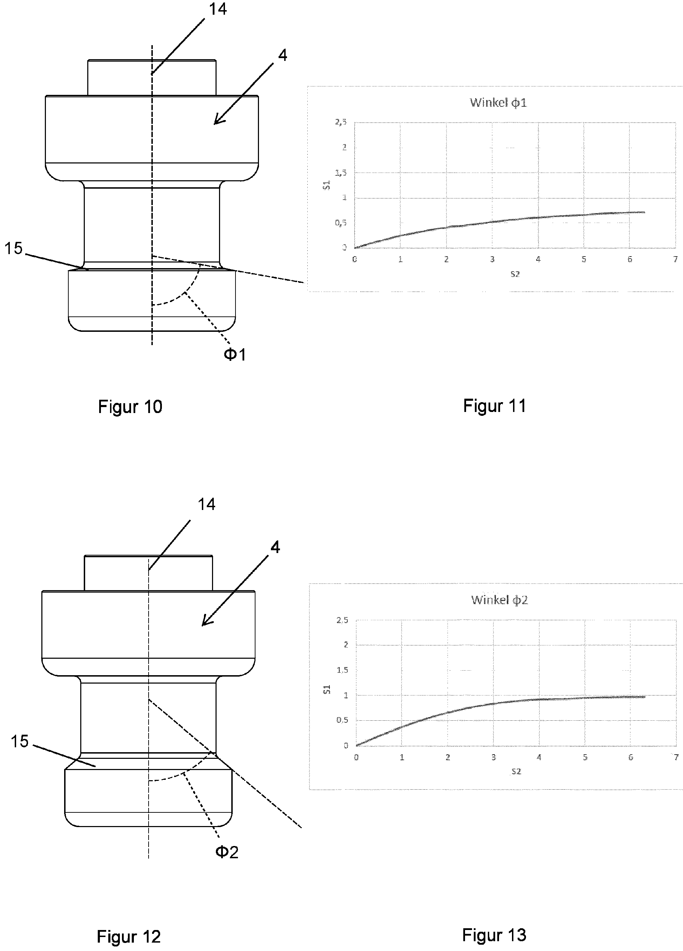

In den Figuren 10, 12, 14 ist der ebenfalls separat beanspruchte Befestigungsbolzen 4 anhand von Einzelteilansichten dargestellt. Aus diesen Figuren geht hervor, dass der Befestigungsbolzen 4 eine an einer Durchmesserstufe des Befestigungsbolzens 4 umlaufende Anlagefläche 15 aufweist. In den Figuren 10, 12, 14 sind in Bezug auf die Längsachse 14 des Befestigungsbolzens 4 unterschiedliche Winkel ϕ1, ϕ2, ϕ3 der Anlagefläche 15 gezeigt. Die Anlagefläche 15 steht in Wirkverbindung mit dem Anlageabschnitt 13 jedes Hebelelementes 7. In den dazugehörigen Diagrammen in den Figuren 11, 13 und 15 ist der aus dem vorbestimmten Winkel ϕ1, ϕ2, ϕ3 resultierende axiale Weg S1 des Befestigungsbolzens 4 in der Aufnahmebohrung 3 über den axialen Weg S2 des Betätigungselements 6 beim Spannen und Verriegeln des Befestigungsbolzens 4 dargestellt.

In Figur 10 ist ein erster bezogen auf die Längsachse 14 des Befestigungsbolzens 4 stumpfer großer Winkel ϕ1 an der Anlagefläche 15 vorgesehen. Aus dem dazugehörigen Diagramm gemäß Figur 11 ist ersichtlich, dass hieraus ein geringerer Weg S1 resultiert. Infolgedessen ergibt sich eine hohe Einzugskraft zum Verriegeln des Befestigungsbolzens 4 durch die Hebelelemente 7.

In Figur 12 ist ein zweiter bezogen auf die Längsachse 14 des Befestigungsbolzens 4 mittlerer Winkel ϕ2 an der Anlagefläche 15 vorgesehen. Aus dem dazugehörigen Diagramm gemäß Figur 13 ist ersichtlich, dass sich hieraus ein mittlerer, also größerer als bei dem ersten stumpfen Winkel ϕ1, resultierender axialer Weg S1 bei dem Befestigungsbolzen 4 ergibt. Infolgedessen ergibt sich eine geringere Einzugskraft zum Verriegeln des Befestigungsbolzens 4 durch die Hebelelemente 7 als bei dem ersten Winkel ϕ1 an der Anlagefläche 15.

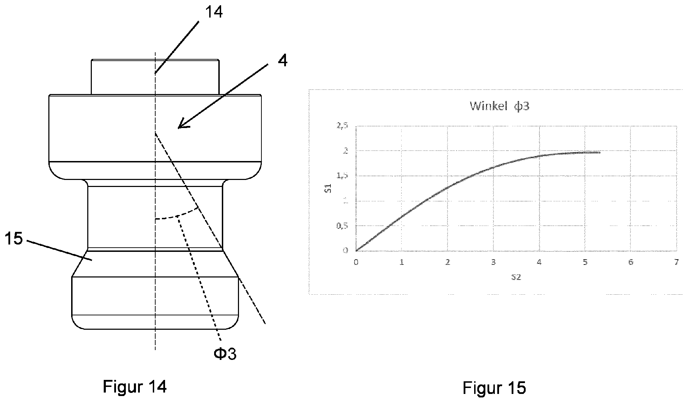

In Figur 14 ist ein dritter bezogen auf die Längsachse 14 des Befestigungsbolzens 4 kleinerer spitzer Winkel ϕ3 der Anlagefläche 15 vorgesehen. Aus dem dazugehörigen Diagramm gemäß Figur 15 ist ersichtlich, dass sich hieraus der größte axiale Weg bei dem Befestigungsbolzen 4 in Bezug auf den ersten Winkel ϕ1 und den zweiten Winkel ϕ2 ergibt. Infolgedessen ergibt sich die geringste Einzugskraft zum Verriegeln des Befestigungsbolzens 4 durch die Hebelelemente 7 in Bezug auf den ersten Winkel ϕ1 und den zweiten Winkel ϕ2 der Anlagefläche 15.

### Bezugszeichen

- 1: Bearbeitungsmachine
- 2: Grundkörper
- 3: Aufnahmebohrung
- 4: Befestigungsbolzen
- 5: Aufnahmeraum
- 6: Betätigungselement
- 7: Hebelelementes
- 8: Lageraufnahme des Betätigungselements für ein Hebelelement
- 9: Lagerabschnitt des Hebelelements
- 10: Aufnahmebereich des Betätigungselements für ein Federelement
- 11: Deckelelement
- 12: erster Abstützabschnitt des Hebelelements
- 13: Anlageabschnitt des Hebelelements
- 14: Längsachse des Befestigungsbolzens
- 15: Anlagefläche des Befestigungsbolzens
- 16: zweiter Abstützabschnitt des Hebelelements
- 17: Federelement
- 18: Aufnahmebereich des Deckelelementes für das Federelement
- 19: Befestigungsschraube
- 20: Oring
- ϕ1: erster Winkel
- ϕ2: zweiter Winkel
- ϕ3: dritter Winkel
- S1: axialer Weg des Befestigungsbolzens zwischen Verriegelung und Entriegelung
- S2: axialer Weg des Betätigungselements zwischen Verriegelung und Entriegelung

## Patentansprüche

1. Befestigungsanordnung für eine Bearbeitungsmachine (1) mit einem plattenförmigen Grundkörper (2) mit zumindest einer Aufnahmebohrung (3) und mit zumindest einem Befestigungsbolzen (4) zum unmittelbaren oder mittelbaren Befestigen von zu bearbeitenden Werkstücken, wobei der Befestigungsbolzen (4) in der Aufnahmebohrung (3) des Grundkörpers (2) lösbar befestigt ist, wobei der Grundkörper (2) einen Aufnahmeraum (5) aufweist, wobei ein Deckelelement (11) zum Begrenzen des Aufnahmeraumes (5) an der Unterseite des Grundkörpers (2) befestigt ist, wobei in dem Aufnahmeraum (5) zumindest ein axial bewegbares Betätigungselement (6) vorgesehen ist, mit dem mehrere Hebelelemente (7) zum axialen Bewegen des Befestigungsbolzens (4) in der Aufnahmebohrung (3) zum Spannen und Verriegeln oder zum Entspannen und Entriegeln des Befestigungsbolzens (4) betätigbar sind, und wobei jedes Hebelelement (7) einen dem Betätigungselement (6) zugeordneten Lagerabschnitt (9) zum Ausführen einer Schwenkbewegung, einen dem Grundkörper (2) zugeordneten ersten Abstützabschnitt (12) und einen dem Deckelelement (11) des Grundkörpers (2) zugeordneten zweiten Abstützabschnitt (16) sowie einen dem Befestigungsbolzen (4) zugewandten Anlageabschnitt (13) zum axialen Bewegen zum Spannen und Verriegeln oder zum Entspannen und Entriegeln des Befestigungsbolzens (4) in der Aufnahmebohrung (3) des Grundkörpers (2) aufweist.

2. Befestigungsanordnung nach Anspruch 1, **dadurch gekennzeichnet, dass** ein erstes Ende jedes Hebelelements (7) dem Betätigungselement (6) und ein zweites Ende jedes Hebelelements (7) dem in der Aufnahmebohrung (3) vorgesehenen Befestigungsbolzen (4) zugeordnet sind.

3. Befestigungsanordnung nach Anspruch 1 oder 2, **dadurch gekennzeichnet, dass** der Lagerabschnitt (9) dem ersten Ende jedes Hebelelements (7) zugeordnet ist und dass der erste Abstützabschnitt (12) und der zweite Abstützabschnitt (16) sowie der Anlageabschnitt (13) dem zweiten Ende des Hebelelements (7) zugeordnet sind, wobei der erste Abstützabschnitt (12) an dem Grundkörper (2) und der zweite Abstützabschnitt (16) an dem Deckelelement (11) sowie der Anlageabschnitt (13) an einer korrespondierenden Anlagefläche (15) des Befestigungsbolzens (4) anliegen.

4. Befestigungsanordnung nach einem der vorangehenden Ansprüche, **dadurch gekennzeichnet, dass** der Anlageabschnitt (13) jedes Hebelelementes (7) an der korrespondierenden mit vorbestimmtem Winkel (ϕ1, ϕ2, ϕ3) bezogen auf eine Längsachse (14) ausgerichteten Anlagefläche (15) des Befestigungsbolzens (4) zum axialen Bewegen des Befestigungsbolzens (4) in der Aufnahmebohrung (3) anliegt.

5. Befestigungsanordnung nach Anspruch 4, **dadurch gekennzeichnet, dass** der von dem Befestigungsbolzen (4) ausgeführte axiale Weg (S1) von dem gewählten Winkel (ϕ1, ϕ2, ϕ3) an der Anlagefläche (15) abhängig ist, wobei je kleiner der Winkel (ϕ1, ϕ2, ϕ3) an der Anlagefläche (15) ist, desto größer ist der axiale Weg (S1) des Befestigungsbolzens (4).

6. Befestigungsanordnung nach einem der vorangehenden Ansprüche, **dadurch gekennzeichnet, dass** der Aufnahmeraum (5) in dem Grundkörper (2) um die zentral angeordnete Aufnahmebohrung (3) im Wesentlichen ringförmig ausgeführt ist und dass das Betätigungselement (6) eine an den ringförmigen Aufnahmeraum (5) angepasste Ringform aufweist.

7. Befestigungsanordnung nach einem der vorangehenden Ansprüche, **dadurch gekennzeichnet, dass** der Aufnahmeraum (5) durch das an dem Grundkörper (2) befestigte Deckelelement (11) begrenzt ist.

8. Befestigungsanordnung nach Anspruch 6 oder 7, **dadurch gekennzeichnet, dass** das ringförmige Betätigungselement (6) über den Umfang im Bereich des Innendurchmessers verteilt mehrere Lageraufnahmen (8) für die Lagerabschnitte (9) der Hebelelemente (7) aufweist.

9. Befestigungsanordnung nach einem der Ansprüche 6 bis 8, **dadurch gekennzeichnet, dass** das ringförmige Betätigungselement (6) über den Umfang im Bereich des Außendurchmessers mehrere Aufnahmebereiche (10) für Federelemente (17) aufweist, wobei die Federelemente (17) jeweils mit einem ersten Ende in dem Aufnahmebereich (10) des Betätigungselementes (6) und mit einem zweiten Ende an einem Aufnahmebereich (18) des Deckelelementes (11) abgestützt sind.

10. Bearbeitungsmachine mit zumindest einer Befestigungsanordnung nach einem der Ansprüche 1 bis 9.

11. Verfahren zum Betätigen einer Befestigungsanordnung nach einem der Ansprüche 1 bis 9, **dadurch gekennzeichnet, dass** ein Befestigungsbolzen (4) der Befestigungsanordnung über eine Anlagefläche (15) und daran anliegenden Hebelelementen (7) in einem Aufnahmeraum (5) eines Grundkörpers (2) in einer gespannten und verriegelten Position über ein vorgespanntes Betätigungselement (6) gehalten wird, dass zum axialen Bewegen des Befestigungsbolzens (4) in eine entspannte und entriegelte Position ein unter Druck stehendes Medium in den Aufnahmeraum (5) eingeleitet wird, sodass das Betätigungselement (6) axial gegen die Vorspannung bewegt wird und dadurch die Hebelelemente (7) geschwenkt werden und der verriegelte Befestigungsbolzen (4) freigegeben wird, und dass der freigegebene Befestigungsbolzen (4) nach dem Entfernen des Mediums wieder aufgrund der wirkenden Vorspannung verriegelt wird.

## Claims

1. A fastening arrangement for a processing machine (1) that has a plate-shaped base (2) with at least one receiving hole (3) and at least one fastening bolt (4) for directly or indirectly fastening workpieces that are to be processed, wherein the fastening bolt (4) is placed in the receiving hole (3) in the base such that it can be removed therefrom, wherein the base (2) has a receiving space (5), wherein a cover element (11) for delimiting the receiving space (5) is fastened to the underside of the base body (2), wherein at least one axially movable actuating element (6) is provided in the receiving space (5), with which numerous lever elements (7) can be actuated to axially move the fastening bolt (4) in the receiving hole (3) in order to clamp and secure, or release, the fastening bolt (4), und wherein each lever element (7) has a supporting segment (9) dedicated to the actuating element (6) where it pivots, a first bracing segment (12) dedicated to the base, and a second bracing segment (16) dedicated to a cover element (11) on the base (2), and a bearing segment (13) facing the fastening bolt (4) for moving the fastening bolt (4) axially in the receiving hole (3) in the base (2) in order to clamp and secure it in place, or to release it.

2. The fastening arrangement according to claim 1, **characterized in that** a first end of each lever element (7) is dedicated to the actuating element (6) and a second end of each lever element (7) is dedicated to the fastening bolt (4) in the receiving hole (3).

3. The fastening arrangement according to claim 1 or 2, **characterized in that** the supporting segment (9) is on the first end of each lever element (7) and the first bracing segment (12) and second bracing segment (16) as well as the bearing segment (13) are on the second ends of the lever elements (7), wherein the first bracing segment (12) bears on the base (2) and the second bracing segment (16) bears on the cover element (11), and the bearing segment (13) bears on a corresponding bearing surface (15) on the fastening bolt (4).

4. The fastening arrangement according to any of the preceding claims, **characterized in that** the bearing segment (13) on each lever element (7) bears on the corresponding bearing surface (15) on the fastening bolt (4), which is at a predetermined angle (ϕ1, ϕ2, ϕ3) to the longitudinal axis (14) thereof, in order to move the fastening bolt (4) axially in the receiving hole (3).

5. The fastening arrangement according to claim 4, **characterized in that** the axial distance (S1) travelled by the fastening bolt (4) depends on the selected angle (ϕ1, ϕ2, ϕ3) of the bearing surface (15), wherein a smaller angle (ϕ1, ϕ2, ϕ3) of the bearing surface results in a greater distance (S1) travelled by the fastening bolt (4).

6. The fastening arrangement according to any of the preceding claims, **characterized in that** the receiving space (5) in the base (2) encompassing the central receiving hole (3) is substantially circular, and that the actuating element (6) has a circular form that fits in the circular receiving space (5).

7. The fastening arrangement according to any of the preceding claims, **characterized in that** the receiving space (5) is delimited by the cover element (11) attached to the base (2).

8. The fastening arrangement according to claim 6 or 7, **characterized in that** the circular actuating element (6) has numerous receivers (8) for the supporting segments (9) of the lever elements (7) distributed over its inner circumference.

9. The fastening arrangement according to any of the claims 6 to 8, **characterized in that** the circular actuating element (6) has numerous receivers (10) for spring elements (17) distributed over its outer circumference, wherein the spring elements (17) are each braced at a first end in the receivers (10) in the actuating element (6) and at a second end in a receiver (18) on the cover element (11).

10. A processing machine that has at least one fastening arrangement according to any of the claims 1 to 9.

11. A method for operating a fastening arrangement according to any of the claims 1 to 9, **characterized in that** a fastening bolt (4) in the fastening arrangement is held in place by a bearing surface (15) and lever elements (7) bearing thereon in a receiving space (5) in a base (2) when clamped and secured in place, via a pretensioned actuating element (6), wherein in order to move the fastening bolt (4) axially in a released state, a pressurized medium is introduced into the receiving space (5), such that the actuating element (6) is moved counter to the pretensioning, resulting in a pivoting of the lever elements (7), and releasing the fastening bolt (4), and wherein after removing the medium, the released fastening bolt (4) is again secured in place due to the pretensioning acting thereon.

## Revendications

1. Dispositif de fixation pour une machine d'usinage (1), présentant un corps de base (2) en forme de plaque avec au moins un alésage de réception (3) et au moins un boulon de fixation (4) permettant la fixation directe ou indirecte de pièces à usiner, le boulon de fixation (4) étant fixé de manière amovible dans l'alésage de réception (3) du corps de base (2), le corps de base (2) présentant un espace de réception (5), un élément de recouvrement (11) destiné à délimiter l'espace de réception (5) étant fixé sur la face inférieure du corps de base (2), dans l'espace de réception (5) étant prévu au moins un élément d'actionnement (6) déplaçable axialement grâce auquel plusieurs leviers (7) destinés à déplacer axialement le boulon de fixation (4) dans l'alésage de réception (3) peuvent être actionnés afin de serrer et verrouiller ou bien de desserrer et déverrouiller le boulon de fixation (4), et chaque levier (7) présentant une partie de palier (9) affectée à l'élément d'actionnement (6) en vue d'effectuer un mouvement pivotant, une première zone de support (12) affectée au corps de base (2), une deuxième zone de support (16) affectée à l'élément de couverture (11) du corps de base (2) ainsi qu'une zone d'appui (13) tournée vers le boulon de fixation (4) et permettant le déplacement axial en vue de serrer et verrouiller ou bien de desserrer et déverrouiller le boulon de fixation (4) dans l'alésage de réception (3) du corps de base (2).

2. Dispositif de fixation selon la revendication 1, **caractérisé en ce qu'**une première extrémité de chaque levier (7) est affectée à l'élément d'actionnement (6) et qu'une deuxième extrémité de chaque levier (7) est affectée au boulon de fixation (4) prévu dans l'alésage de réception (3).

3. Dispositif de fixation selon la revendication 1 ou 2, **caractérisé en ce que** la partie de palier (9) est affecté à la première extrémité de chaque levier (7) et que la première zone de support (12) et la deuxième zone de support (16) ainsi que la zone d'appui (13) sont affectées à la deuxième extrémité du levier (7), la première zone de support (12) reposant contre le corps de base (2), la deuxième zone de support (16) reposant contre l'élément de recouvrement (11) et la zone d'appui (13) reposant contre une surface d'appui (15) correspondante du boulon de fixation (4).

4. Dispositif de fixation selon l'une quelconque des revendications précédentes, **caractérisé en ce que** la zone d'appui (13) de chaque levier (7) repose contre la surface d'appui (15) correspondante du boulon de fixation (4) laquelle est orientée selon un angle prédéterminé (Φ1, Φ2, Φ3) par rapport à un axe longitudinal (14) et sert au déplacement axial du boulon de fixation (4) dans l'alésage de réception (3).

5. Dispositif de fixation selon la revendication 4, **caractérisé en ce que** la course axiale (S1) effectuée par le boulon de fixation (4) dépend de l'angle (Φ1, Φ2, Φ3) choisi au niveau de la surface d'appui (15), à savoir plus l'angle (Φ1, Φ2, Φ3) formé au niveau de la surface d'appui (15) est petit et plus la course axiale (S1) du boulon de fixation (4) est grande.

6. Dispositif de fixation selon l'une quelconque des revendications précédentes, **caractérisé en ce que** l'espace de réception (5) ménagé dans le corps de base (2) est réalisé essentiellement en forme d'anneau autour de alésage de réception (3) disposé au centre, et **en ce que** l'élément d'actionnement (6) présente une forme annulaire adaptée à l'espace de réception (5) annulaire.

7. Dispositif de fixation selon l'une quelconque des revendications précédentes, **caractérisé en ce que** l'espace de réception (5) est délimité par l'élément de recouvrement (11) fixé au corps de base (2).

8. Dispositif de fixation selon la revendication 6 ou 7, **caractérisé en ce que** l'élément d'actionnement (6) de forme annulaire présente, répartis sur la circonférence au niveau du diamètre intérieur, plusieurs logements de palier (8) destinés à recevoir les parties de paliers (9) des leviers (7).

9. Dispositif de fixation selon l'une quelconque des revendications 6 à 8, **caractérisé en ce que** l'élément d'actionnement (6) présente, sur la circonférence au niveau du diamètre extérieur, plusieurs zones de réception (10) destinées à recevoir des éléments élastiques (17), les éléments élastiques (17) s'appuyant, chacun, avec une première extrémité dans la zone de réception (10) de l'élément d'actionnement (6) et avec une deuxième extrémité sur une zone de réception (18) de l'élément de recouvrement (11).

10. Machine d'usinage présentant au moins un dispositif de fixation selon l'une quelconque des revendications 1 à 9.

11. Procédé permettant d'actionner un dispositif de fixation selon l'une quelconque des revendications 1 à 9, **caractérisé en ce qu'**un boulon de fixation (4) de dispositif de fixation est maintenu, par l'intermédiaire d'une surface d'appui (15) et de leviers (7) qui s'appuient sur celle-ci, à l'intérieur d'un espace de réception (5) d'un corps de base (2) dans une position serrée et verrouillée grâce à un élément d'actionnement (6) mis sous prétension, **en ce qu'**un fluide sous pression est introduit dans l'espace de réception (5) afin que le boulon de fixation (4) se déplace axialement dans une position desserrée et déverrouillée, de sorte que l'élément d'actionnement (6) se déplace axialement en s'opposant à la force de prétension, ce qui fait pivoter les leviers (7) et libère le boulon de fixation (4) verrouillé, et **en ce que** le boulon de fixation (4) libéré est, une fois le fluide retiré, à nouveau verrouillé sous l'effet de la force de prétension.
